Europäisches Patentamt

European Patent Office

Office européen des brevets

(19)

(11) **EP 1 154 966 B1**

(12) **EUROPÄISCHE PATENTSCHRIFT**

(45) Veröffentlichungstag und Bekanntmachung des
Hinweises auf die Patenterteilung:
**11.08.2004 Patentblatt 2004/33**

(21) Anmeldenummer: **00984602.3**

(22) Anmeldetag: **11.12.2000**

(51) Int Cl.⁷: **C04B 7/14**, C04B 7/00

(86) Internationale Anmeldenummer:
**PCT/AT2000/000334**

(87) Internationale Veröffentlichungsnummer:
**WO 2001/046081 (28.06.2001 Gazette 2001/26)**

(54) **VERFAHREN ZUM HERSTELLEN VON MERGELSCHLACKE**

METHOD FOR PRODUCING MARL SLAGS

PROCEDE DE PRODUCTION DE BOUES MARNIERES

(84) Benannte Vertragsstaaten:
**AT BE CH CY DE DK ES FI FR GB GR IE IT LI LU
MC NL PT SE TR**

(30) Priorität: **20.12.1999 AT 214399**

(43) Veröffentlichungstag der Anmeldung:
**21.11.2001 Patentblatt 2001/47**

(73) Patentinhaber: **Patco Engineering GmbH
6300 Zug (CH)**

(72) Erfinder: **EDLINGER, Alfred
A-6780 Bartholomäberg (AT)**

(74) Vertreter: **Haffner, Thomas M., Dr.
Patentanwalt
Schottengasse 3a
1014 Wien (AT)**

(56) Entgegenhaltungen:
**WO-A-98/45218          DE-A- 2 322 889
FR-A- 2 318 834          GB-A- 356 144**

**Beschreibung**

Die Erfindung bezieht sich auf ein Verfahren zum Herstellen von Mergelschlacken und -schlackenzementen oder Mischkomponenten für Mischzemente aus Mergel mit einer Basizität $CaO/SiO_2$ von < 2,0.

Bei der Herstellung von Zement werden als Ausgangsstoffe kalkige und tonige Gesteine, insbesondere Kalksteine und Kalkmergel eingesetzt und zu Zementklinker gebrannt. Der in den Ausgangsstoffen enthaltene Kalk wird vollständig an Kieselsäuretonerde und gegebenenfalls Eisen gebunden, wodurch die für Portlandzementklinker üblichen Zementmineralien, wie Alit, Belit, Brownmillerit und Glas, gebildet werden. Um bei vergleichsweise tiefen Temperaturen von etwa 1350° C die gewünschte Sinterung zu Zementklinker zu gewährleisten, sind verhältnismäßig hochwertige Ausgangsstoffe und insbesondere hoch kalkhältiger Kalkmergel erforderlich. Derartiger Kalkmergel, welcher üblicherweise eine Basizität zwischen 3 und 4 aufweist und neben Kalk $SiO_2$, $Al_2O_3$ und Eisenoxide enthält, kommt aber in der Natur nicht nur als relativ hochwertiger und weitestgehend reiner Kalkmergel, sondern vielmehr in wesentlich höheren Mengen als gewöhnlicher bzw. minderwertiger Mergel vor. Der Mergel mit wesentlich größerer Verbreitung zeichnet sich durch Basizitäten zwischen 0,8 und 2 aus und wird häufig auch als toniger Mergel vorgefunden. Diese vergleichsweise minderwertigen Ausgangsprodukte, die eine wesentlich höhere Verbreitung aufweisen, lassen sich beim konventionellen Zementherstellungsverfahren nicht ohne aufwendige Reinigung und Anreicherungen des Kalkgehaltes einsetzen und stehen als billiges Rohmaterial in großen Mengen zur Verfügung.

Schlackenzemente und insbesondere Hochofenschlackenzemente weisen gleichfalls hydraulische Eigenschaften auf und es wurde bereits gezeigt, daß metallurgische Schlacken durch Optimierung der Schlackenchemie und insbesondere durch Einstellung der Basizität und des Aluminatgehaltes sowie durch spezielle Aktivierung soweit verbessert werden können, daß sie einer Festigkeitsentwicklung im Beton entsprechen und dem Klinkerzement zumindest gleichwertig sind.

Die vorliegende Erfindung zielt nun darauf ab, weit verbreitete und billige Rohmaterialmergel mit geringerer Basizität wirtschaftlich zur Herstellung von Schlackenzementen oder Mischkomponenten für Mischzement nutzbar zu machen, wobei gleichzeitig die gewünschten Produkteigenschaften in hohem Maß den jeweiligen Bedürfnissen angepaßt werden können. Zur Lösung dieser Aufgabe besteht das erfindungsgemäße Verfahren im wesentlichen darin, daß toniger Mergel oder eine Mischung aus Mergel und Ton mit einer Basizität von < 2,0 in einer ersten Verfahrensstufe getrocknet, vorgewärmt und kalziniert wird und daß anschließend das erhaltene Produkt in einer zweiten Verfahrensstufe in einem gesonderten Schmelzofen bei höheren Temperaturen als in der ersten Verfahrensstufe geschmolzen wird und aus der Schmelze granuliert wird. Das Kalzinieren ist eine endotherme Reaktion, während das Schmelzen eine exotherme Reaktion darstellt. Dadurch, daß toniger Mergel, d.h. relativ geringwertiger Mergel, mit höherem $Al_2O_3$-Gehalt oder eine Mischung aus minderwertigem Mergel und Ton mit einer Basizität von unter 2 in einer ersten Verfahrensstufe getrocknet, vorgewärmt und kalziniert wird, wird zunächst sichergestellt, daß die hohen Mengen an beim Kalzinieren freigesetztem $CO_2$ nicht auf bei der Zementherstellung üblicherweise erforderlichen Temperaturen für die Sinterung aufgewärmt werden müssen. Die Kalzination der Hydrat-, Schwefel- und Karbonatverbindungen wird somit bei vergleichsweise niedrigerer Temperatur durchgeführt, sodaß die großen freiwerdenden Gasmengen bei entsprechend niederem Temperaturniveau anfallen, wodurch der thermische Wirkungsgrad und damit die Wirtschaftlichkeit des Prozesses verbessert wird. Aufgrund der relativ geringen Reinheit der eingesetzten Ausgangsstoffe erfolgt die Kalzination bereits bei tieferen Temperaturen als dies bei hochreinen Kalziumkarbonaten der Fall wäre. Dadurch, daß anschließend das erhaltene Produkt in einer zweiten Verfahrensstufe in einem gesonderten Schmelzofen bei höheren Temperaturen als in der ersten Verfahrensstufe geschmolzen wird, stehen alle Möglichkeiten der nachträglichen Korrektur der Schmelzenzusammensetzung zur Verfügung und es gelingt durch entsprechende Granulierung der Schmelze den gewünschten Glasanteil sicherzustellen und zu gewährleisten, daß bei der Abkühlung eine unerwünschte Kristallisation weitestgehend vermieden werden kann. Die Trocknung, Vorwärmung und Kalzinierung in einer ersten Verfahrensstufe bei entsprechend tieferer Temperatur erlaubt es darüberhinaus im Vergleich zu bekannten Zementklinkersinterverfahren mit wesentlich grobkörnigerem Einsatzgut zu arbeiten, sodaß die Rohgutaufbereitung und insbesondere eine Mahlung in der Regel nicht erforderlich ist, sondern lediglich ein Feinbrechen des groben Einsatzgutes durchgeführt werden muß. Das erfindungsgemäße Verfahren weist auch einen wesentlich geringeren Wärmebedarf auf, als das Klinkerverfahren.

Mit Vorteil wird das erfindungsgemäße Verfahren so durchgeführt, daß die erste Verfahrensstufe in einem Schwebegas-Wärmetauscher, einem Drehrohr-, Etagen- oder Schachtofen oder einem Wirbelschicht- oder Zyklon-Vorwärmeaggregat vorgenommen wird. In besonders vorteilhafter Weise kann hiebei ein Schwebegas-Wärmetauscher verwendet werden, wobei insbesondere dann, wenn in der ersten Stufe ein Drehrohrofen oder Schachtofen eingesetzt wird, die Körnigkeit des Einsatzgutes noch gröber gewählt werden kann und beispielsweise Einsatzgut mit Korngrößen bis 40 mm ohne weiteres getrocknet, vorgewärmt und kalziniert werden kann.

In besonders vorteilhafter Weise wird die zweite Verfahrensstufe in einem Schmelzzyklon, einem Drehrohr- oder Herdofen oder einem Eisenschmelz-Oxidationsreaktor vorgenommen, wobei im Falle der Verwendung eines Einschmelz-Oxidationsreaktors auch eine Schlackenschaumbildung vorteilhaft sein kann.

Wesentlich für die Erzielung der gewünschten zementtechnologischen Eigenschaften ist aber nun die Einstellung der Schlackenbasizität der Zielschlacke, wobei hier in vorteilhafter Weise so vorgegangen wird, daß die Zielschlacke durch Mischen von Mergel und Ton auf eine Basizität $CaO/SiO_2$ zwischen 0,9 und 1,85 eingestellt wird. Bei gleichzeitiger Ansteuerung eines $Al_2O_3$-Gehaltes zwischen 6 und 20 Gew.% kann eine hochwertige synthetische Hochofenschlacke gewonnen werden, wobei diese $Al_2O_3$-Gehalte in besonders einfacher Weise durch Einsatz von tonigen Mergeln erzielt werden können. Bei Einsatz von anderen Mergelqualitäten als Hauptkomponente kann mittels Bauxit, Tonen, Flugaschen oder weiteren industriellen Abfallstoffen, wie beispielsweise Rotschlämmen, Krätzen, korundhaltigen Schleifstäuben oder Feuerfest-Ausbruch, die gewünschte Schlackenchemie eingestellt werden.

Wesentlich für die Erzielung der gewünschten zementtechnologischen Eigenschaften ist naturgemäß eine entsprechend rasche Abkühlung, um Kristallbildungen zu behindern. Je nach Basizität der Schlacke zeichnet sich die Schlacke durch unterschiedliche Viskositäten aus, wobei insbesondere bei Basizitäten über 1,4 die Schlacke relativ hoch viskos wird und in konventionellen Granulationsverfahren, wie beispielsweise bei einem Granulieren in Heißwasser, die Kristallbildung nicht mehr zuverlässig verhindert werden kann. Mit Vorteil wird daher im Rahmen des erfindungsgemäßen Verfahrens so vorgegangen, daß die Schmelze bei Basizitäten von > 1,4 in einen Granulator, insbesondere einen Dampfgranulator, versprüht wird. Die Sprühgranulation, bei welcher die Abkühlung der schmelzflüssigen Tröpfchen zumeist durch Eindüsen von Wasser oder Wasserdampf erfolgt, kann noch dadurch wesentlich verbessert werden, daß zusätzlich Kohlenwasserstoff in den Sprühgranulator eingedüst wird. Die thermische Zersetzung von Kohlenwasserstoff entzieht den versprühten Tröpfchen Wärme mit einem Kühlgradienten von $10^4$ bis $10^5$ K/s, wobei gleichzeitig hochwertiges Synthesegas gebildet wird, welches, wie es einer bevorzugten Weiterbildung des erfindungsgemäßen Verfahrens entspricht, in der ersten Verfahrensstufe verbrannt werden kann, da hier der eigentliche Wärmebedarf für die Kalzination anfällt.

Da aufgrund der relativ geringen Reinheit der Ausgangsstoffe die Kalzination bei relativ tiefen Temperaturen erfolgt, wird mit Vorteil das erfindungsgemäße Verfahren so durchgeführt, daß die erste Verfahrensstufe bis zu Temperaturen von 950° bis 1000° C geführt wird, wobei bei Temperaturen von 100 bis 210° C getrocknet, von 210° bis 600° C vorgewärmt und bei 600° bis 1000° C kalziniert wird.

In der zweiten Verfahrensstufe, in welcher die Schlacke geschmolzen wird, um in der Folge unter Ausbildung der glasigen Konsistenz erstarrt zu werden, wird mit Vorteil so vorgegangen, daß bei Endtemperaturen zwischen 1450° und 1550° C gearbeitet wird.

Wie bereits erwähnt, zeichnet sich das erfindungsgemäße Verfahren dadurch aus, daß eine aufwendige Rohgutaufbereitung entbehrlich ist und insbesondere eine Mahlung der Ausgangsstoffe nicht erforderlich ist. Mit Vorteil wird das erfindungsgemäße Verfahren so durchgeführt, daß die erste Verfahrensstufe mit feingebrochenem Mergel einer mittleren Teilchengröße von 20 mm bis 30 mm durchgeführt wird.

Zur weiteren Verbesserung der zementtechnologischen Eigenschaft kann erfindungsgemäß so vorgegangen werden, daß dem Einsatzmaterial By-Pass-Staub aus der Klinkerherstellung zugesetzt wird. Da im Rahmen des erfindungsgemäßen Verfahrens eine Schlackenschmelze hergestellt wird, gelingt es auf die Art und Weise den im By-Pass-Staub aus der Klinkerherstellung enthaltenen hohen Alkaligehalt in die Schmelze einzubringen, wobei ein auf diese Weise gebildetes Produkt besonders reaktiv ist und sich durch hohe Frühfestigkeiten auszeichnet. Klinkerrohmaterialien, wie sie im üblichen Zementherstellungsverfahren zum Einsatz gelangen, zeichnen sich in aller Regel durch hohen Alkaligehalt aus und die Verarbeitung derartig alkalireicher Rohmaterialien stellt in der Regel ein Entsorgungsproblem dar, welches mit dem erfindungsgemäßen Verfahren gelöst werden kann. Vorteilhaft ist auch der Einsatz weiterer industrieller, alkalihaltiger Abfallstoffe, z.B. aus der Papier- und Zellstoffherstellung, welche auch teilweise hohen $Al_2O_3$-Anteil aufweisen, sowie von Organika wie Lignin, deren Heizwert genützt werden kann.

Wenn die Schmelze einer konventionellen Wassergranulation unterworfen werden soll, muß die Basizität auf unter 1,4 abgesenkt werden, wobei in diesen Fällen der $Al_2O_3$-Gehalt der Zielschlacke entsprechend angehoben werden muß, um klinkerähnlichen Festigkeitsverlauf des Endproduktes zu erzielen.

Im Rahmen des erfindungsgemäßen Verfahrens stört auch der Einsatz von Einsatzmaterialen mit erhöhten Dolomitanteilen nicht, wobei mit Vorteil lediglich dafür Sorge getragen wird, daß der MgO-Anteil des Einsatzmateriales auf unter 19 Gew.% eingestellt wird. Bis zu diesen Mengen kann Magnesiumoxid die Granulierbarkeit aufgrund der Verringerung der Schlackenviskosität verbessern, was zu einem höheren Anteil an amorphen bzw. glasigen Partikeln führt.

Das erfindungsgemäße Verfahren wird nachfolgend anhand von Ausführungsbeispielen näher erläutert.

Beispiel 1

Aus den Einsatzmaterialien Mergel und Ton wird eine Mergelschlacke hergestellt. Die Ausgangsmaterialien wiesen folgende Richtanalyse auf:

| Komponente (%) | Mergel | Ton |
|---|---|---|
| Glühverlust | 32,5 | 12,5 |
| $SiO_2$ | 23 | 46 |
| $Al_2O_3$ | 4 | 24 |
| $Fe_2O_3$ | 2 | 15 |
| CaO | 33 | 0,72 |
| MgO | 3 | 0,33 |
| $SO_3$ | 1 | - |
| $K_2O$ | 0,5 | - |
| $Na_2O$ | 0,2 | 0,1 |
| $TiO_2$ | 0,4 | 1 |
| Summe | 99,6 | 99,7 |
| C/S | 1,4348 | 0,0157 |

Den Ausgangsmaterialien wurde Klinkerofen-By-Pass-Staub zugesetzt, wodurch die Frühfestigkeit der Mergelschlacke signifikant gesteigert werden konnte.

Zur Einstellung der Schlackenbasizität $CaO/SiO_2$ auf unter 1,4, um eine konventionelle Wassergranulation einzusetzen, wurde der Mischungsanteil der beiden Komponenten wie folgt ermittelt, wobei eine Zielbasizität von 1,1 angestrebt wurde:

$$\text{Mergelanteil (x)} = \frac{(C/S) \cdot SiO_2 \text{ (Ton)} - CaO \text{ (Ton)}}{CaO \text{ (Mergel)} - (C/S) \cdot SiO2 \text{ (Mergel)}}$$

$$\text{Mergelanteil} = \frac{1,1 \cdot 46 - 0,72}{33 - 1,1 \cdot 23} = 6,48$$

Ein Teil Ton wurde somit mit 6,48 Teilen Mergel vermischt, sodaß sich eine Mischung aus 86,6 Gew.% Mergel und 13,4 Gew.% Ton ergab. Die Rohmischung für die geplante Mergelschlacke wies hierauf die nachfolgende Zusammensetzung auf:

| Mergelschlacke | |
|---|---|
| Komponente | Anteil (%) |
| $SiO_2$ | 37,4 |
| $Al_2O_3$ | 9,6 |
| $Fe_2O_3$ | 5 |
| CaO | 41,2 |
| MgO | 3,8 |
| $SO_3$ | 1,2 |
| $K_2O$ | 0,6 |
| $Na_2O$ | 0,3 |
| $TiO_2$ | 0,7 |
| Summe | 99,8 |
| C/S | 1,1 |

Nach einem Trocknen bei 100° bis 210° C, einem Vorwärmen bei 210° bis 600° C und einem Kalzinieren bei 600° bis 950° C wurde das getrocknete und kalzinierte Produkt aus einem Schwebegas-Wärmetauscher abgezogen und in einen Schmelzzyklon eingebracht. Im Schmelzzyklon wurde die Temperatur zwischen 1450° und 1550° C eingestellt, worauf die Schmelze in Heißwasser granuliert wurde.

Im Schwebegas-Wärmetauscher kann zur Verringerung der Stickoxidanteil auch eine gestufte Nachverbrennung durch Einblasen von Verbrennungsluft stattfinden, wodurch der thermische Wirkungsgrad verbessert wird. Der im Schmelzzyklon eingesetzte Brennstoff wurde bei einer alternativen Verfahrensführung, bei welcher die Schmelze in einen Sprühgranulator ausgestoßen wird, durch Einsatz von Kohlenwasserstoffen bei der Granulation gebildet, wobei das gebildete Spaltgas bzw. Synthesegas als Brennstoff gemeinsam mit Luft im Schmelzzyklon eingesetzt wurde. Außerdem wurde bei dieser Granuliermethode das Schlacken-Eisenoxid praktisch vollständig metallisiert und durch anschließende Magnetscheidung der Schlacke abgetrennt.

Beispiel 2

Unter Verwendung eines Drehrohrofens in der ersten Verfahrensstufe und eines Herdofens in der zweiten Verfahrensstufe wurde fein gebrochener Mergel mit Stückgrößen um 25 mm eingesetzt. Die Mergelschlacke wies die nachfolgende Zusammensetzung auf:

| Mergelschlacke | |
|---|---|
| Komponente | Anteil (%) |
| $SiO_2$ | 34,6 |
| $Al_2O_3$ | 6 |
| $Fe_2O_3$ | 3 |
| CaO | 49,6 |
| MgO | 2 |
| $K_2O$ | 0,7 |
| $Na_2O$ | 0,3 |
| $TiO_2$ | 0,6 |
| Summe | 96,8 |

Aufgrund der relativ hohen Basizität von 1,43 wurde die Schlacke durch Versprühen in einen Sprühgranulator zerkleinert, wodurch ein hoher Feingranulatanteil erzielt wurde. Der hohe Feingranulatanteil zeichnete sich aufgrund der hohen Basizität durch besonders hohe hydraulische Aktivität aus. Eine derartige Schlacke mit einer Basizität von 1,43 konnte mit Heißwasser nicht mehr erfolgreich granuliert werden, da der zementtechnologische wichtige Feinanteil aufgrund der Belit-Kristall-Bildung hydraulisch inaktiv wurde.

**Patentansprüche**

1. Verfahren zum Herstellen von Mergelschlacken und -schlackenzementen oder Mischkomponenten für Mischzemente aus Mergel mit einer Basizität $CaO/SiO_2$ von < 2,0, **dadurch gekennzeichnet, daß** toniger Mergel oder eine Mischung aus Mergel und Ton mit einer Basizität von < 2,0 in einer ersten Verfahrensstufe getrocknet, vorgewärmt und kalziniert wird und daß anschließend das erhaltene Produkt in einer zweiten Verfahrensstufe in einem gesonderten Schmelzofen bei höheren Temperaturen als in der ersten Verfahrensstufe geschmolzen wird und aus der Schmelze granuliert wird.

2. Verfahren nach Anspruch 1, **dadurch gekennzeichnet, daß** die erste Verfahrensstufe in einem Schwebegas-Wärmetauscher, einem Drehrohr-, Etagen- oder Schachtofen oder einem Wirbelschichtoder Zyklon-Vorwärmeaggregat vorgenommen wird.

3. Verfahren nach Anspruch 1 oder 2, **dadurch gekennzeichnet, daß** die zweite Verfahrensstufe in einem Schmelzzyklon, einem Drehrohr- oder Herdofen oder einem Eisenschmelz-Oxidationsreaktor vorgenommen wird.

4. Verfahren nach Anspruch 1, 2 oder 3, **dadurch gekennzeichnet, daß** die Zielschlacke durch Mischen von Mergel und Ton auf eine Basizität $CaO/SiO_2$ zwischen 0,9 und 1,85 eingestellt wird.

5. Verfahren nach einem der Ansprüche 1 bis 4, **dadurch gekennzeichnet, daß** die Schmelze bei Basizitäten von > 1,4 in einen Granulator, insbesondere einen Dampfgranulator, versprüht wird.

6. Verfahren nach einem der Ansprüche 1 bis 5, **dadurch gekennzeichnet, daß** die erste Verfahrensstufe bis zu Temperaturen von 950° bis 1000° C geführt wird, wobei bei Temperaturen von 100 bis 210° C getrocknet, von 210° bis 600° C vorgewärmt und bei 600° bis 1000° C kalziniert wird.

7. Verfahren nach einem der Ansprüche 1 bis 6, **dadurch gekennzeichnet, daß** die zweite Verfahrensstufe bei Temperaturen zwischen 1450° C und 1550° C durchgeführt wird.

8. Verfahren nach einem der Ansprüche 1 bis 7, **dadurch gekennzeichnet, daß** die erste Verfahrensstufe mit feingebrochenem Mergel einer mittleren Teilchengröße von 20 mm bis 30 mm durchgeführt wird.

9. Verfahren nach einem der Ansprüche 1 bis 8, **dadurch gekennzeichnet, daß** dem Einsatzmaterial By-Pass-Staub aus der Klinkerherstellung zugesetzt wird.

10. Verfahren nach einem der Ansprüche 1 bis 9, **dadurch gekennzeichnet, daß** der MgO-Anteil des Einsatzmateriales auf unter 19 Gew.% eingestellt wird.

11. Verfahren nach einem der Ansprüche 1 bis 10, **dadurch gekennzeichnet, daß** die Sprühgranulation unter Einsatz von Kohlenwasserstoffen als Kühlmittel vorgenommen wird und daß das gebildete Synthesegas in der ersten Verfahrensstufe verbrannt wird.

**Claims**

1. A method for producing marl slags and marl slag cements, or mixed components for mixed cements, from marl having a basicity $CaO/SiO_2$ of <2.0, **characterized in that** clayey marl, or a mixture of marl and clay, having a basicity of <2.0 is dried, preheated and calcined in a first method stage, and that the product obtained is subsequently melted in a second method stage in a separate melting furnace at higher temperatures than in the first method stage and is granulated from the melt.

2. A method according to claim 1, **characterized in that** the first method stage is carried out in a suspension-type heat exchanger, rotary tubular kiln, multi-story furnace or shaft furnace, or in a fluidized-bed or cyclone preheating unit.

3. A method according to claim 1 or 2, **characterized in that** the second method stage is carried out in a melting cyclone, rotary tubular kiln or hearth-type furnace, or in an iron smelting oxidation reactor.

4. A method according to claim 1, 2 or 3, **characterized in that** the target slag is adjusted to a basicity $CaO/SiO_2$ of between 0.9 and 1.85 by mixing marl and clay.

5. A method according to any one of claims 1 to 4, **characterized in that** the melt is sprayed in a granulator and, in particular, vapour granulator, at a basicity of >1.4.

6. A method according to any one of claims 1 to 5, **characterized in that** the first method stage is carried out up to temperatures ranging from 950° to 1000°C, wherein drying is effected at temperatures of from 100 to 210°C, preheating is effected at temperatures of from 210° to 600°C and calcining is effected at 600° to 1000°C.

7. A method according to any one of claims 1 to 6, **characterized in that** the second method stage is carried out at temperatures ranging between 1450°C and 1550°C.

8. A method according to any one of claims 1 to 7, **characterized in that** the first method stage is carried out with finely broken marl having a medium particle size of from 20 mm to 30 mm.

9. A method according to any one of claims 1 to 8, **characterized in that** by-pass dust from the production of clinker is added to the charging material.

10. A method according to any one of claims 1 to 9, **characterized in that** the MgO-portion of the charging material is adjusted to below 19% by weight.

11. A method according to any one of claims 1 to 10, **characterized in that** spray granulation is carried out using hydrocarbons as cooling agent, and that the synthesis gas formed is burned in the first method stage.

**Revendications**

1. Procédé pour la production de boues marnières et de ciments de laitier ou de constituants de mélanges pour des mélanges de ciments à base de marne ayant une basicité CaO/SiO$_2$ de < 2,0, **caractérisé en ce que** dans une première étape de procédé de la marne argileuse ou un mélange de marne et d'argile avec une basicité de < 2,0, on sèche, on préchauffe et on calcine et **en ce qu'**ensuite dans une deuxième étape de procédé l'on fond le produit obtenu dans un four de fusion spécial à des températures plus élevées que dans la première étape de procédé et l'on granule à partir de la fonte.

2. Procédé selon la revendication 1, **caractérisé en ce que** l'on effectue la première étape de procédé dans un dispositif de préchauffage par mise en suspension dans les gaz, un four rotatif, un four à étagères ou un four droit ou un groupe de préchauffage à lit fluidisé ou à cyclone.

3. Procédé selon la revendication 1 ou 2, **caractérisé en ce que** l'on effectue la deuxième étape de procédé dans un cyclone de fusion, un four rotatif ou four à sole ou un réacteur d'oxydation de fonte de fer.

4. Procédé selon la revendication 1, 2 ou 3, **caractérisé en ce que** l'on ajuste le laitier à obtenir à une basicité CaO/SiO$_2$ entre 0,9 et 1,85 par mélange de marne et d'argile.

5. Procédé selon une des revendications 1 à 4, **caractérisé en ce que** l'on atomise la fonte à des basicités de > 1,4 dans un granulateur, en particulier un granulateur à vapeur.

6. Procédé selon une des revendications 1 à 5, **caractérisé en ce que** l'on conduit la première étape de procédé jusqu'à des températures de 950 ° à 1000 °C, en séchant à des températures de 100 à 210 °C, en préchauffant de 210 ° à 600 °C et en calcinant de 600 ° à 1000 °C.

7. Procédé selon une des revendications 1 à 6, **caractérisé en ce que** l'on réalise la deuxième étape de procédé à des températures entre 1450 °C et 1550°C.

8. Procédé selon une des revendications 1 à 7, **caractérisé en ce que** l'on réalise la première étape de procédé avec de la marne finement broyée d'une taille moyenne de particules de 20 mm à 30 mm.

9. Procédé selon une des revendications 1 à 8, **caractérisé en ce que** l'on ajoute à la matière du lot de la poussière de by-pass provenant de la fabrication de clinker.

10. Procédé selon une des revendications 1 à 9, **caractérisé en ce que** l'on ajuste la teneur en MgO du produit mis en oeuvre à moins de 19 % en poids.

11. Procédé selon une des revendications 1 à 10, **caractérisé en ce que** l'on procède à la granulation par pulvérisation en utilisant des hydrocarbures comme réfrigérants et **en ce que** l'on brûle le gaz de synthèse formé dans la première étape de procédé.